# EUROPÄISCHE PATENTSCHRIFT

(11) **EP 0 640 631 B1**
(45) Veröffentlichungstag und Bekanntmachung des Hinweises auf die Patenterteilung: **27.11.1996**
(21) Anmeldenummer: 94109970.7
(22) Anmeldetag: 28.06.1994
(51) Int. Cl.: C08F 246/00, C08F 2/22, C08K 5/54

(54) **Wässrige, silanolgruppenmodifizierte Dispersionen**
Aqueous dispersions modified with silanole groups
Dispersions aqueuses modifiées par des groupes silanole

(30) Priorität: 30.08.1993 DE 4329088
(43) Veröffentlichungstag der Anmeldung: 01.03.1995
(73) Patentinhaber: HÜLS AKTIENGESELLSCHAFT, 45764 Marl (DE)
(72) Erfinder: Hahn, Karl, Dr., D-45768 Marl (DE); Dören, Klaus, Dr., D-45772 Marl (DE); Horn, Michael, Dr., D-79618 Rheinfelden (DE); Standke, Burkhard, Dr., D-79540 Lörrach (DE)

(56) Entgegenhaltungen:
- EP-A- 0 035 332
- DE-A- 3 630 793
- DE-C- 2 148 458
- US-A- 3 940 360
- US-A- 4 043 953

## Beschreibung

Erfindungsgegenstand sind wäßrige, silanolgruppenmodifizierte Dispersionen mit verbesserter Naßhaftung, insbesondere für Klebemassen und Anstrichmittel.

Silanolgruppenmodifizierte Polymere auch für den Bereich wäßriger Dispersionen sind seit längerer Zeit bekannt (z. B. DE 21 48 458, EP 35 332).

Ebenfalls bekannt ist der vorteilhafte Einsatz dieser wäßrigen Bindemittel im Vergleich zu nicht modifizierten Polymerisaten auf mineralischen oder metallischen Untergründen, beispielsweise in Bautenschutzmitteln und im Klebstoffbereich (DE 21 48 456-457, EP 35 332).

In den meisten Fällen erfolgt die Herstellung silanolgruppenmodifizierter Polymerer durch Copolymerisation mit Vinylsilanen bzw. mit (Meth)acrylderivaten, z. B. dem Methacryloxypropyltrimethoxysilan.

Höhermolekulare Siloxane sind insbesondere im Silikonbereich bekannt. So beschreibt die DE 23 10 213 den Einsatz von alkylsubstituierten Polysiloxanen zur Eigenschaftsverbesserung wäßriger Dispersionen.

Ebenfalls bekannt ist der Einsatz polymerer Vinylsiloxane als Pfropfbasis (EP 469 613).

Es bestand die Aufgabe, die bei der Herstellung und Verarbeitung von Bindemitteln entstehenden Anteile umweltschädlicher und geruchsintensiver Bestandteile zu minimieren, wobei der Schwerpunkt bei der Reduktion der Lösemittelbestandteile liegt, insbesondere die Anteile, die bei der Hydrolyse von Vinylalkoxysilanen und ähnlichen Verbindungen entstehenden Alkohole, z. B. Methanol, Methylglykol.

Es wurde überraschend gefunden, daß bei Verwendung der oligomeren Siloxane gemäß Anspruch 1 wäßrige, silanolgruppenmodifizierte Kunststoffdispersionen erhalten werden, die gute Polymereigenschaften und anwendungstechnische Parameter, insbesondere Naßhaftung, aufweisen. Gleichzeitig konnte die Handhabungssicherheit der eingesetzten Siliciumverbindung aufgrund der reduzierten Flüchtigkeit und einem erhöhten Flammpunkt verbessert werden.

Als oligomere Vinylsilane werden Vinylalkoxysilane der allgemeinen Formeln I oder II 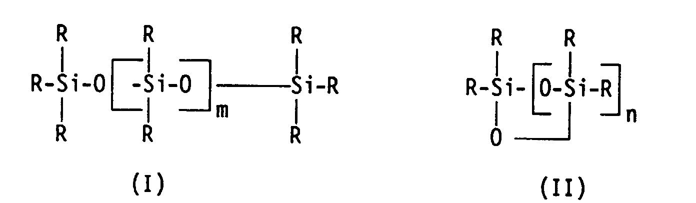 eingesetzt, in denen m eine ganze Zahl von 0 bis 8, n eine ganze Zahl von 2 bis 8 bedeutet, die Substituenten R aus Vinyl-Gruppen, Methoxy- und/oder Ethoxy-Gruppen und/oder gegebenenfalls Alkyl-, Isoalkyl- oder Cycloalkyl-Gruppen mit 1-18 C-Atomen bestehen, wobei pro Silicium-Atom höchstens ein Vinyl-Substituent auftritt, das Molverhältnis von Vinyl- zu Alkoxy-Substituenten 1 : 1 bis 1 : 8 und das Molverhältnis von Vinyl- zu Alkyl-Substituenten 1 : 0 bis 1 : 8 beträgt.

Die Herstellung dieser oligomeren Vinylalkoxysilane ist aus DE 41 37 278 bekannt. Es können prinzipiell Verbindungen der Formel I und II allein oder in Mischungen eingesetzt werden. Der Einsatz in Form von Mischungen ist bevorzugt.

Als Monomere A sind ungesättigte Monomere aus den Gruppen ungesättigter Vinylester mit 1-18 C-Atomen, vinylaromatischen Monomeren, Diene, (Meth)acrylester mit 1-12 C-Atomen, Olefine, Vinylchlorid, Maleinsäure- bzw. Fumarsäuredialkylester mit 1-8 C-Atomen, geeignet. Diese sind mit einem Anteil von 82,5 bis 98,5 Gew.-% in den Kunststoffdispersionen enthalten.

Als monomere ungesättigte Vinylester können Vinylacetat, Vinylpropionat, Vinylester mit in α-Stellung verzweigten Carbonsäuren mit 9-13 C-Atomen (Versaticsäurevinylester) oder Mischungen derselben verwendet werden.

Als vinylaromatische Monomere sind Styrol, Vinyltoluole oder Mischungen derselben geeignet.

Die monomeren Olefine und Diene stammen aus der Gruppe Ethylen, Butadien oder Isopren.

Geeignete monomere (Meth)acrylester sind Ethylacrylat, n-Butylacrylat, 2-Ethylhexylacrylat, Methylmethacrylat, n-Butylmethacrylat oder Mischungen derselben.

Die o. g. Monomeren werden in geeigneten Kombinationen eingesetzt, um die gewünschte Glastemperatur zu realisieren.

Bevorzugt werden in der Kunststoffdispersion als monomere Komponente A Styrol, n-Butylacrylat, 2-Ethylhexylacrylat, Methylmethacrylat, Vinylacetat und Butadien eingesetzt.

Die in den Kunststoffdispersionen enthaltenden 1 - 4 Gew.-% der Komponente B stammen aus der Gruppe Acrylsäure, Methacrylsäure, Maleinsäure, Fumarsäure, Maleinsäuremonobutylester, Itaconsäure oder Mischungen derselben. Insbesondere sind jedoch (Meth)acrylsäure, Maleinsäure oder Fumarsäure enthalten.

Zusätzlich enthalten die Kunststoffdispersionen 0,3 - 1,5 Gew.-% der Komponente C und stammen aus der Gruppe Acrylamid, Methacrylamid, Diacetonacrylamid.

Die Kunststoffdispersionen können gegebenenfalls bis zu 10 Gew.-% ungesättigte funktionelle Monomere E enthalten. Dazu sind z. B. Acrylnitril, Butandiol-1,4-diacrylat, Butandiol-1,4-dimethylacrylat, Hydroxyethylacrylat, Hydroxyethylmethacrylat, Vinylsulfonsäure, 2-Acrylamido-2,2-dimethylpropansulfonsäure, Natriumstyrolsulfonat, Kalium(3-sulfopropyl(meth)acrylat geeignet, aber auch prinzipiell weitere, hier nicht genannte Verbindungen.

Zur Molekulargewichtssteuerung können geeignete Regler, z. B. Merkaptane oder Halogenkohlenwasserstoffe zum Einsatz kommen.

Außerdem sind in den wäßrigen, silanolgruppenmodifizierten Kunststoffdispersionen die üblichen Hilfsstoffe wie z. B. Emulgatoren, Dispergiermittel, Puffersubstanzen, Komplexbildner möglich. Die Herstellung der Dispersionen erfolgt bevorzugt nach einem semikontinuierlichen Verfahren (EP 70 355) unter Verwendung gebräuchlicher Initiatoren, Emulgatoren und ggf. weiteren Hilfsmitteln.

Die Herstellung der erfindungsgemäßen Kunststoffdispersion erfolgt bevorzugt nach dem Emulsions- oder Monomerzulaufverfahren, als Initiatoren werden Peroxodisulfate oder tert.-Butylhydroperoxid oder H₂0₂ in Verbindung mit einem Reduktionsmittel verwendet.

Die Copolymerisation wird Semikontinuierlich bei einer Temperatur von 60 bis 90°C bei pH ≥ 1,5 bis ≤ pH 4,5 durchgeführt.

Bevorzugt werden als Emulgatoren anionische Emulgatoren ggf. in Kombination mit nichtionischen Emulgatoren eingesetzt.

Die Silanzufuhr kann zusammen mit den anderen Monomeren erfolgen, aber auch als getrennter Zulauf ggf. gelöst in einem Teil der (Haupt)monomeren. Der Silanzusatz kann auch zwischen 0 - 40 % des Monomerumsatzes erfolgen, entweder als einmaliger Zusatz oder als kontinuierlicher Zulauf.

In der besonders bevorzugten Ausführungsform können die erfindungsgemäßen wäßrigen, silanolgruppenmodifizierten Kunststoffdispersionen als Komponente A Styrol, Methylmethacrylat, Vinylacetat, n-Butylacrylat, 2-Ethylhexylacrylat oder Butadien, als Komponente B Acrylsäure, Methacrylsäure, Maleinsäure, Fumarsäure, Maleinsäuremonobutylester, Itaconsäure oder Mischungen derselben, insbesondere jedoch (Meth)acrylsäure, Maleinsäure oder Fumarsäure, als Komponente C Acrylamid, Methacrylamid oder Diacetonacrylamid und als Komponente D Vinylsilane gemäß den Formeln I und II enthalten.

Die wäßrigen, silanolgruppenmodifizierten Kunststoffdispersionen sind als Bindemittel zur Herstellung von Klebern, Farben und Anstrichmitteln geeignet.

### Beispiele

Bei den angegebenen Mengen handelt es sich, falls nichts gegenteiliges vermerkt ist, um Gewichtsteile und Gew.-%. Die Polymerisation kann, wie in der EP 70 355 beschrieben, durchgeführt werden.

### Beispiel 1

In 60 Teilen vollentsalztem Wasser werden 0,2 Teile eines Na-Salzes eines sulfatierten Nonylphenols mit ca. 13 Mol Ethylenoxid, je 0,01 Teile EDTA und K₃PO₄ sowie 0,005 Teile (NH₄)₂S₂O₈ gelöst. Diese Lösung wird in einem 12 l V2A-Reaktor mit Doppelmantel und Blattrührer mit 1 °C/Min. auf 77 °C geheizt.

Nach 30 Min. bei 77 °C erfolgt der Zulauf der nachstehend aufgeführten Mischungen.

| Zulauf 1 (Emulsionszulauf) | |
|---|---|
| 23 Gew.-Teile | Wasser |
| 0,9 Gew.-Teile | des o. g. Emulgators |
| 0,6 Gew.-Teile | eines ethoxylierten Laurylalkohols mit ca. 17 Mol Ethylenoxid |
| 0,04 Gew.-Teile | K₃PO₄ |
| 2,0 Gew.-Teile | Acrylsäure |
| 0,8 Gew.-Teile | Acrylamid |
| 46,2 Gew.-Teile | Styrol |
| 50 Gew.-Teile | n-Butylacrylat |
| 0,65 Gew.-Teile | eines oligomeren Vinylalkoxysilans nach DE 41 37 278, Beispiel 6 |

| Zulauf 2 | |
|---|---|
| 15 Gew.-Teile | H₂O |
| 0,8 Gew.-Teile | (NH₄)₂S₂O₈ |

### Dosierbedingungen

Nach 1 Min. des Zulaufs 2 Beginn des Zulaufs 1.

Zulauf 1 erfolgt in 6 h, Zulauf 2 in 7 h.

3 h nach Dosierende des Zulaufs 2 werden noch 0,1 Teile (NH₄)₂S₂O₈/2 Teile H₂O auf einmal zugesetzt.

Nach weiteren 2 h ist die Polymerisation beendet. Es wird abgekühlt, filtriert und mit NaOH auf pH 7,0 eingestellt.

Nach der pH-Einstellung betrug der Feststoff der Dispersion 49,1 %, die Oberflächenspannung der 1 : 1 mit Wasser verdünnten Dispersion 46,9 mN/m.

Die Mindestfilmbilde-Temperatur (MFT) lag bei 15 °C.

### Beispiel 2

Die gemäß Beispiel 1 erhaltene Dispersion wurde zur Herstellung eines zementfreien Fliesenklebers eingesetzt.

### Herstellung der zementfreien Klebmassen

Entsprechend der folgenden Rezeptur wurde eine Klebmasse hergestellt.

Die Naßhaftzugfestigkeit wurde mit keramischen Fliesen auf Betonplatten in Anlehnung an DIN 18 156 bestimmt (Tabelle).

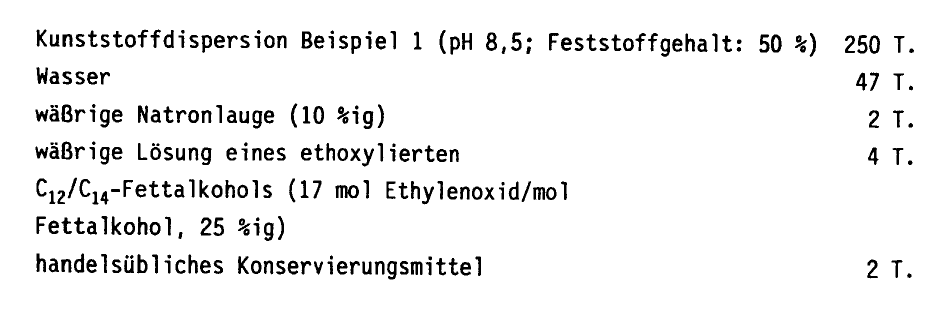

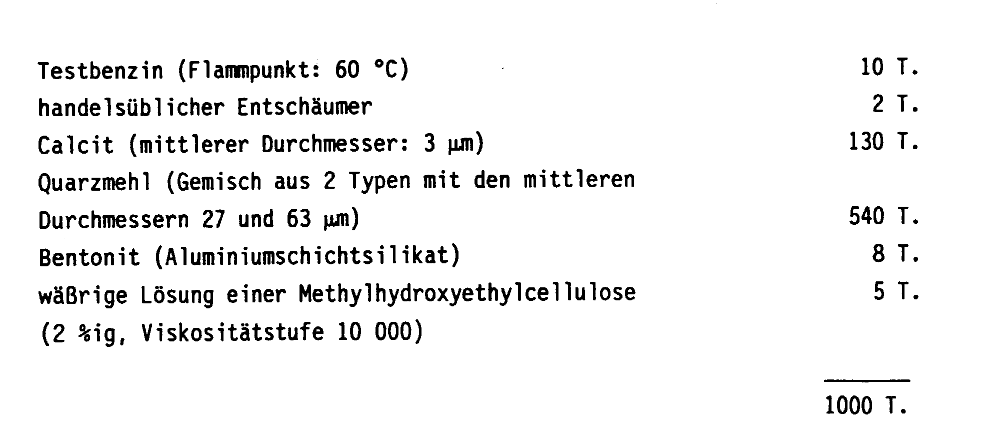

Unter diesen Bedingungen wurde eine Naßhaftzugfestigkeit von 0,56 N/mm² nach 7 d Trocken- und anschließend 7 d Wasserlagerung erreicht.

Die Viskosität des Klebers lag bei 86 000 bzw. 99 000 mPa s nach 1 d bei Raumtemperatur bzw. nach 14 Tagen bei 50 °C.

### Vergleichsbeispiel A (gemäß DE 23 10 213)

Beispiel 1 wurde wiederholt, wobei als Vinylsilan eine Mischung von Divinylmethylpolysiloxanen zum Einsatz kam, d. h. Verbindungen der Formel I, bei denen neben endständigen Vinylresten sämtliche Reste R = Methyl darstellen (d. h. keine Alkoxygruppen).

Der Einsatz dieser Dispersion gemäß Beispiel 2 zur Herstellung einer Klebemasse ergab eine unzureichende Naßhaftung.

### Beispiel 3

In 60 Teilen vollentsalztem Wasser werden 0,25 Teile des in Beispiel 1 genannten Emulgators, je 0,01 Teile EDTA und K₃PO₄ sowie 0,005 Teile Na₂S₂O₈ gelöst. Diese Lösung wird in einem 12 l V2A-Reaktor mit Doppelmantel mit 1 °/Min. auf 77 °C geheizt.

Nach 30 Min. bei 77 °C erfolgt der Zulauf der nachstehenden Mischungen.

| Zulauf 1 (Emulsionszulauf) | |
|---|---|
| 20 Gew.-Teile | Wasser |
| 0,9 Gew.-Teile | des in Beispiel 1 genannten anionischen Emulgators |
| 0,6 Gew.-Teile | des nichtionischen Emulgators aus Beispiel 1 |
| 0,04 Gew.-Teile | K₃PO₄ |
| 1,5 Gew.-Teile | Acrylsäure |
| 0,5 Gew.-Teile | Acrylamid |
| 37,7 Gew.-Teile | Styrol |
| 60 Gew.-Teile | n-Butylacrylat |
| 0,3 Gew.-Teile | eines oligomeren Vinylalkoxysilans nach DE 41 37 278, Beispiel 6 |

| Zulauf 2 | |
|---|---|
| 18 Gew.-Teile | Wasser |
| 0,4 Gew.-Teile | Na₂S₂O₈ |

### Dosierbedingungen

Die Herstellung entsprach Beispiel 1, zur Nachinitiierung wurden aber 0,05 Teile Na₂S₂O₈/2 Teile H₂O eingesetzt.

Die mit NaOH auf pH 7,0 eingestellte Dispersion wurden nach der Polymerisation 2 h durch Einleiten von Wasserdampf desodoriert, um Restbestandteile der Monomeren sowie weitere flüchtige Begleitstoffe auszutreiben.

Anschließend wurde wiederum auf ca. 50 % Feststoff aufkonzentriert und mit NaOH auf pH 7,5 eingestellt.

Das Endprodukt hatte einen Feststoff von 50,8 %. Die Oberflächenspannung lag bei 46,5 mN/m bei 25 % Feststoff. Die Mindestfilmbildetemperatur (MFT) betrug 3 °C.

### Beispiel 4 und Vergleichsbeispiel B

Die Dispersion des Beispiels 3 diente zur Herstellung einer geruchsarmen Innenfarbe gemäß der nachstehenden Rezeptur des Beispiels 4. Vergleichsbeispiel B enthält kein Vinylalkoxysilan.

| Pos. | Substanz | Gewichtsteile | |
|---|---|---|---|
| | | Beispiel 4 | Vergleichsbeispiel B |
| 1. | Wasser | 303 | 303 |
| 2. | Hydroxyethylcellulose, 2 %ige wäßrige Lösung, 3 000 mPa s | 5 | 5 |
| 3. | Natronlauge, 10 %ig | 1 | 1 |
| 4. | Na-Polyphosphat, 10 %ige wäßrige Lösung | 1 | 1 |
| 5. | Na-Salz einer Polyacrylsäure, 30 %ige wäßrige Lösung | 3 | 3 |
| 6. | handelsüblicher Entschäumer | 3 | 3 |
| 7. | handelsübliches Konservierungsmittel | 4 | 4 |
| 8. | Titandioxid, Rutiltyp | 190 | 190 |
| 9. | Synthetisches Calciumcarbonat (mittlerer Durchmesser: 0,3 µm) | 80 | 80 |
| 10. | Talkum (mittlerer Durchmesser 5 µm) | 50 | 50 |
| 11. | Calcit (mittlerer Durchmesser 5 µm) | 260 | 260 |
| 12. | Dispersion gemäß Beispiel 3 | 100 | - |
| 13. | Dispersion gemäß Beispiel 3, jedoch ohne Vinylalkoxysilan | - | 100 |
| | | 1 000 | 1 000 |

| Prüfdaten | Beispiel 4 | Vergleichsbeispiel B |
|---|---|---|
| Viskosität DIN 53 019 | | |
| Contraves STV C/III nach 1 d mPa s | 1 500 | 1 540 |
| nach 1 Monat 50 °C mPa s | 1 860 | 1 750 |
| Scheuertest nach DIN 53 778 Zyklen | 1 200 | 500 |

## Patentansprüche

1. Wäßrige, silanolgruppenmodifizierte Kunststoffdispersion, erhalten durch Emulsionspolymerisation von
A) 82,5 - 98,5 Gew.-% mindestens einem ungesättigten Monomeren aus den Gruppen ungesättigter Vinylester mit 1-18 C-Atomen, vinylaromatischen Monomeren, Diene, (Meth)acrylester mit 1-12 C-Atomen, Olefine, Vinylchlorid, Maleinsäure- bzw. Fumarsäuredialkylester mit 1-8 C-Atomen,
B) 1 - 4 Gew.-% mindestens einer ungesättigten Carbonsäure,
C) 0,3 - 1,5 Gew.-% mindestens eines Amids einer ungesättigten Carbonsäure,
D) 0,2 - 2,0 Gew.-% mindestens eines Vinylsilans
E) 0 - 10 Gew.-% ungesättigter funktioneller Monomere,
in Gegenwart üblicher Hilfsmittel,
dadurch gekennzeichnet,
daß als Vinylsilan oligomere Vinylalkoxysilane der allgemeinen Formeln I oder II 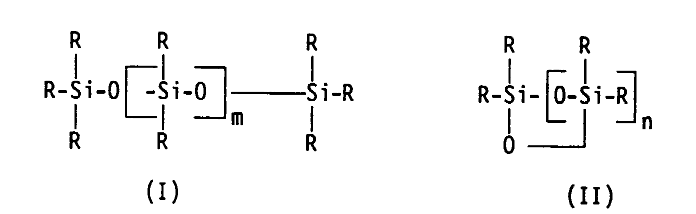 eingesetzt werden, in denen m eine ganze Zahl von 0 bis 8, n eine ganze Zahl von 2 bis 8 bedeutet, die Substituenten R aus Vinyl-Gruppen, Methoxy- und/oder Ethoxy-Gruppen und/oder gegebenenfalls Alkyl-, Isoalkyl- oder Cycloalkyl-Gruppen mit 1-18 C-Atomen bestehen, wobei pro Silicium-Atom höchstens ein Vinyl-Substituent auftritt, das Molverhältnis von Vinyl- zu Alkoxy-Substituenten 1 : 1 bis 1 : 8 und das Molverhältnis von Vinyl- zu Alkyl-Substituenten 1 : 0 bis 1 : 8 beträgt.

2. Kunststoffdispersion nach Anspruch 1,
dadurch gekennzeichnet,
daß als Monomere ungesättigte Vinylester Vinylacetat, Vinylpropionat, Vinylester mit in α-Stellung verzweigten Carbonsäuren mit 9-13 C-Atomen (Versaticsäurevinylester) oder Mischungen derselben eingesetzt werden.

3. Kunststoffdispersion nach den Ansprüchen 1 und 2,
dadurch gekennzeichnet,
daß als vinylaromatische Monomere Styrol, Vinyltoluole oder Mischungen derselben eingesetzt werden.

4. Kunststoffdispersion nach den Ansprüchen 1 bis 3,
dadurch gekennzeichnet,
daß als monomere Olefine und/oder Diene Ethylen, Butadien, Isopren oder Mischungen derselben eingesetzt werden.

5. Kunststoffdispersion nach den Ansprüchen 1 bis 4,
dadurch gekennzeichnet,
daß als monomere (Meth)acrylester Ethylacrylat, n-Butylacrylat, 2-Ethylhexylacrylat, Methylmethacrylat, n-Butylmethacrylat oder Mischungen derselben eingesetzt werden.

6. Kunststoffdispersion nach den Ansprüchen 1 bis 5,
dadurch gekennzeichnet,
daß als monomere Komponente B Acrylsäure, Methacrylsäure, Maleinsäure, Fumarsäure, Maleinsäuremonobutylester, Itaconsäure oder Mischungen derselben eingesetzt werden.

7. Kunststoffdispersion nach den Ansprüchen 1 bis 6,
dadurch gekennzeichnet,
daß als monomere Komponente C Acrylamid, Methacrylamid, Diacetonacrylamid oder Mischungen derselben eingesetzt werden.

8. Kunststoffdispersion nach den Ansprüchen 1 bis 7,
dadurch gekennzeichnet,
daß als ungesättigte funktionelle Monomere E Acrylnitril, Butandiol-1,4-diacrylat, Butandiol-1,4-dimethylacrylat, Hydroxyethylacrylat, Hydroxyethylmethacrylat, Vinylsulfonsäure, 2-Acrylamido-2,2-dimethylpropansulfonsäure, Natriumstyrolsulfonat, Kalium(3-sulfopropyl)(meth)acrylat oder Mischungen derselben eingesetzt werden.

9. Verfahren zur Herstellung von wäßrigen, silanolgruppenmodifizierten Kunststoffdispersionen erhalten durch Emulsionspolymerisation von
A) 82,5 - 98,5 Gew.-% mindestens einem ungesättigten Monomeren aus den Gruppen ungesättigter Vinylester mit 1-18 C-Atomen, vinylaromatischen Monomeren, Diene, (Meth)acrylester mit 1-12 C-Atomen, Olefine, Vinylchlorid, Maleinsäure- bzw. Fumarsäuredialkylester mit 1-8 C-Atomen,
B) 1 - 4 Gew.-% mindestens einer ungesättigten Carbonsäure,
C) 0,3 - 1,5 Gew.-% mindestens eines Amids einer ungesättigten Carbonsäure,
D) 0,2 - 2,0 Gew.-% mindestens eines Vinylsilans
E) 0 - 10 Gew.-% ungesättigter funktioneller Monomere,
in Gegenwart üblicher Hilfsmittel,
dadurch gekennzeichnet,
daß als Vinylsilan Gemische der oligomeren Vinylalkoxysilane der allgemeinen Formeln I oder II 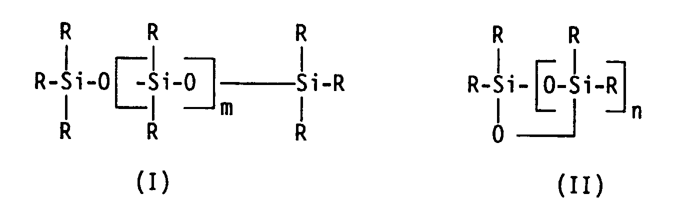 eingesetzt werden, und die Copolymerisation semikontinuierlich bei einer Temperatur von 60 bis 90 °C bei pH ≥ 1,5 bis ≤ pH 4,5 durchgeführt wird.

10. Verfahren nach Anspruch 9,
dadurch gekennzeichnet,
daß die Zufuhr des Vinylalkoxysilans während 0 - 40 % des Monomerumsatzes oder über die gesamte Zulaufzeit der übrigen Monomeren erfolgt.

11. Verwendung der Kunststoffdispersion als Bindemittel, vorzugsweise zur Herstellung von Klebern, Farben und Anstrichmitteln.

## Claims

1. Aqueous, silanol-group-modified plastic dispersion, obtained by emulsion polymerization of
A) 82.5 - 98.5% by weight of at least one unsaturated monomer from the groups comprising unsaturated vinyl esters containing 1 - 18 C atoms, aromatic vinyl monomers, dienes, (meth)acrylic esters containing 1 - 12 C atoms , olefins, vinyl chloride, dialkyl maleates or fumarates containing 1 - 18 C atoms,
B) 1 - 4% by weight of at least one unsaturated carboxylic acid,
C) 0.3 - 1.5% by weight of at least one amide of an unsaturated carboxylic acid,
D) 0.2 - 2.0% by weight of at least one vinylsilane,
E) 0 - 10% by weight of unsaturated functional monomers,
in the presence of standard auxiliaries,
characterized in that, as vinylsilane, use is made of oligomeric vinylalkoxysilanes of the general formulae I or II 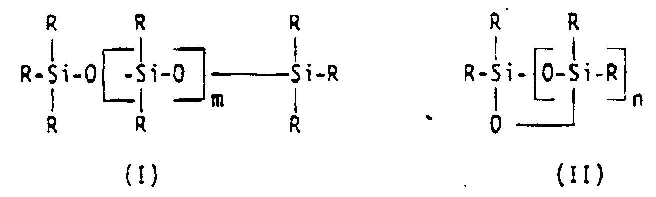 in which m denotes an integer from 0 to 8, n denotes an integer from 2 to 8, the substituents R are composed of vinyl groups, methoxy and/or ethoxy groups and/or, optionally, alkyl, isoalkyl or cycloalkyl groups containing 1 - 18 C atoms, at most one vinyl substituent occurring per silicon atom, the molar ratio of vinyl to alkoxy substituents being 1:1 to 1:8 and the molar ratio of vinyl to alkyl substituents being 1:0 to 1:8.

2. Plastic dispersion according to Claim 1, characterized in that vinyl acetate, vinyl propionate, vinyl esters with carboxylic acids branched in the α-position and containing 9 - 13 C atoms (vinyl versatates) or mixtures of the same are used as monomeric unsaturated vinyl esters.

3. Plastic dispersion according to Claims 1 and 2, characterized in that styrene, vinyltoluenes or mixtures of the same are used as aromatic vinyl monomers.

4. Plastic dispersion according to Claims 1 to 3, characterized in that ethylene, butadiene, isoprene or mixtures of the same are used as monomeric olefins and/or dienes.

5. Plastic dispersion according to Claims 1 to 4, characterized in that ethyl acrylate, n-butyl acrylate, 2-ethylhexyl acrylate, methyl methacrylate, n-butyl methacrylate or mixtures of the same are used as monomeric (meth)acrylic esters.

6. Plastic dispersion according to Claims 1 to 5, characterized in that acrylic acid, methacrylic acid, maleic acid, fumaric acid, monobutyl maleate, itaconic acid or mixtures of the same are used as monomeric component B.

7. Plastic dispersion according to Claims 1 to 6, characterized in that acrylamide, methacrylamide, diacetone acrylamide or mixtures of the same are used as monomeric component C.

8. Plastic dispersion according to Claims 1 to 7, characterized in that acrylonitrile, 1,4-butanediol diacrylate, 1,4-butanediol dimethacrylate, hydroxyethyl acrylate, hydroxyethyl methacrylate, vinylsulphonic acid, 2-acrylamido-2,2-dimethylpropanesulphonic acid, sodium styrenesulphonate, potassium3-sulphopropyl(meth)acrylate or mixtures of the same are used as unsaturated functional monomers E.

9. Process for preparing aqueous silanol-group-modified plastic dispersions obtained by emulsion polymerization of
A) 82.5 - 98.5% by weight of at least one unsaturated monomer from the groups comprising unsaturated vinyl esters containing 1 - 18 C atoms, aromatic vinyl monomers, dienes, (meth)acrylic esters containing 1 - 12 C atoms, olefins, vinyl chloride, dialkyl maleates or fumarates containing 1 - 18 C atoms,
B) 1 - 4% by weight of at least one unsaturated carboxylic acid,
C) 0.3 - 1.5k by weight of at least one amide of an unsaturated carboxylic acid,
D) 0.2 - 2.0% by weight of at least one vinylsilane,
E) 0 - 10% by weight of unsaturated functional monomers
in the presence of standard auxiliaries,
characterized in that, as vinylsilane, use is made of mixtures of the oligomeric vinylalkoxysilanes of the general formulae I or II 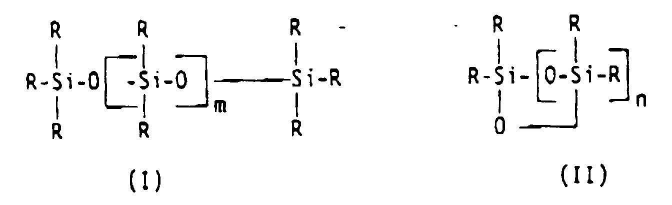 and the copolymerization is carried out semicontinuously at a temperature of 60 to 90°C at a pH of ≥ 1.5 to ≤ 4.5.

10. Process according to claim 9, characterized in that the vinylalkoxysilane is supplied during 0 - 40% of the monomer reaction or over the entire feed time of the other monomers.

11. Use of the plastic dispersion as binder, preferably for preparing adhesives, paints and coating agents.

## Revendications

1. Dispersion aqueuse de matière plastique dont les groupes silanol ont été modifiés, obtenue par polymérisation en émulsion de :
A) 82,5 - 98,5 % en poids d'au moins un monomère non saturé choisi dans le groupe des esters de vinyle non saturés ayant de 1 à 18 atomes de carbone, les monomères vinylaromatiques, les diènes, les esters (méth)acryliques ayant de 1 à 12 atomes de carbone, les oléfines, le chlorure de vinyle, les esters de dialcoyle d'acide maléique ou fumarique ayant de 1 à 8 atomes de carbone,
B) 1 - 4 % en poids d'au moins un acide carboxylique non saturé,
C) 0,3 -1,5 % en poids d'au moins un amide d'un acide carboxylique non saturé,
D) 0,2 - 2,0 % en poids d'au moins un vinylsilane,
E) 0 -10 % en poids d'un monomère non saturé fonctionnel en présence des adjuvants usuels,
caractérisée en ce que
comme vinylsilane on met en oeuvre des vinylalcoxysilanes oligomères de formule générale I ou II 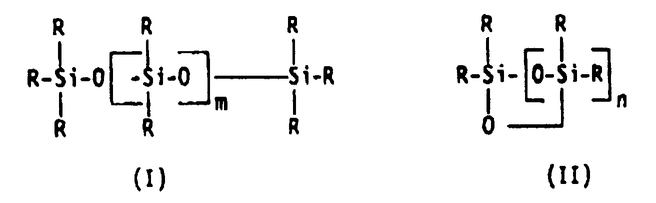 dans lesquels m signifie un nombre entier allant de 0 à 8, n un nombre entier de 2 à 8, les substituants R consistent en des groupes vinyle, des groupes méthoxy et/ou éthoxy et/ou le cas échéant des groupes alcoyle, isoalcoyle ou cycloalcoyle, ayant de 1 à 18 atomes de carbone
dans laquelle par atome de silicium au maximum un substituant vinyle survient, le rapport molaire des substituants vinyle à alcoxy s'élève de 1 : 1à 1 : 8 et le rapport molaire des substituants vinyle à alcoyle s'élève de 1 : 0 à 1 : 8.

2. Dispersion de matière plastique selon la revendication 1,
caractérisée en ce que
l'on met en oeuvre comme monomère d'ester vinylique non saturé, l'acétate de vinyle, le propionate de vinyle, un ester de vinyle avec des acides carboxyliques ramifiés en position α ayant de 9 à 13 atomes de carbone (ester de vinyle d'acide versatique) ou des mélanges de ceux-ci.

3. Dispersion de matière plastique selon les revendications 1 et 2,
caractérisée en ce que
l'on met en oeuvre comme monomères vinylaromatiques le styrène, le vinyltoluène, ou des mélanges de ceux-ci.

4. Dispersion de matière plastique selon les revendications 1 3,
caractérisée en ce que
l'on met en oeuvre comme oléfines monomères et/ou comme diènes, l'éthylène, le butadiène, l'isoprène ou des mélanges de ceux-ci.

5. Dispersion de matière plastique selon les revendications 1 à 4,
caractérisée en ce que
l'on met en oeuvre comme ester (méth)acrylique monomère, l'acrylate d'éthyle, l'acrylate de n-butyle, l'acrylate de 2-éthylhexyle, le méthacrylate de méthyle, le méthacrylate de n-butyle ou des mélanges de ceux-ci.

6. Dispersion de matière plastique selon les revendications 1 à 5,
caractérisée en ce que
l'on met en oeuvre comme composant B monomère, de l'acide acrylique, de l'acide méthacrylique, de l'acide maléique, de l'acide fumarique, de l'ester monobutylique d'acide maléique, de l'acide itaconique, ou des mélanges de ceux-ci.

7. Dispersion de matière plastique selon les revendications 1 à 6,
caractérisée en ce que
l'on met en oeuvre comme composant C monomère, l'acrylamide, le méthacrylamide, le diacétone acrylamide, ou des mélanges de ceux-ci.

8. Dispersion de matière plastique selon les revendications 1 à 7,
caractérisée en ce que
comme monomère E fonctionnel non saturé on met en oeuvre l'acrylonitrile, le diacrylate de butane 1,4-diol, le diméthylacrylate de butane 1,4-diol, l'acrylate d'hydroxyéthyle, le méthacrylate d'hydroxyéthyle, l'acide vinylsulfonique, l'acide 2-acrylamido 2,2-diméthylpropane sulfonique, le styrène sulfonate de sodium, le (3-sulfopropyl)(méth)acrylate de potassium ou des mélanges de ceux-ci.

9. Procédé de production de dispersions aqueuses de matières plastiques, dont les groupes silanol ont été modifiés, obtenues par polymérisation en émulsion de
A) 82,5 - 98,5 % en poids d'au moins un monomère non saturé choisi dans le groupe des esters de vinyle non saturés ayant de 1 à 18 atomes de carbone, des monomères vinylaromatiques, des diènes, des esters (méth)acryliques ayant de 1 à 12 atomes de carbone, des oléfines, du chlorure de vinyle, des esters dialcoyliques d'acide maléique ou d'acide fumarique ayant de 1 à 8 atomes de carbone,
B) 1- 4 % en poids d'au moins un acide carboxylique non saturé,
C) 0,3 -1,5 % en poids d'au moins un amide d'un acide carboxylique non saturé,
D) 0,2 - 2,0 % en poids d'au moins un vinylsilane,
E) 0 -10 % en poids d'un monomère non saturé fonctionnel, en présence des adjuvants habituels,
caractérisée en ce que
comme vinylsilane on met en oeuvre des mélanges de vinylalcoxysilanes oligomères de formule générale I ou II 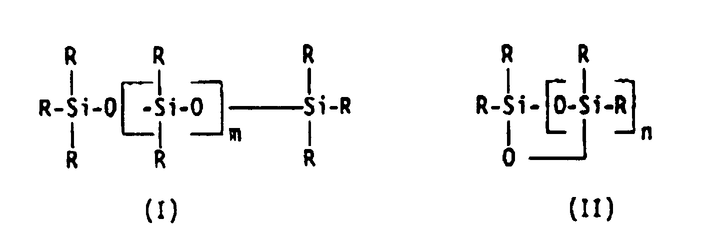 et en ce que l'on effectue la polymérisation d'une manière semi-continue à une température de 60 à 90°C, un pH ≥ 1,5 à ≤ pH 4,5.

10. Procédé selon la revendication 9,
caractérisé en ce que
l'amenée du vinylalcoxysilane s'effectue pendant 0 à 40 % de la conversion du monomère ou pendant la totalité du temps d'amenée des monomères restants.

11. Utilisation de la dispersion de matière plastique comme agent liant, de préférence en vue de la production d'adhésifs, de colorants et d'agents de coloration.
